# EUROPÄISCHE PATENTSCHRIFT

(11) **EP 0 718 745 B1**
(45) Veröffentlichungstag und Bekanntmachung des Hinweises auf die Patenterteilung: **12.04.2000**
(21) Anmeldenummer: 95118380.5
(22) Anmeldetag: 22.11.1995
(51) Int. Cl.: G05G 5/04, G05G 7/02, F24C 3/12

(54) **Gasherd mit Schalteinheit**
Gas stove with switching unit
Cuisinière à gaz avec unité de commutation

(30) Priorität: 23.12.1994 DE 9420804 U
(43) Veröffentlichungstag der Anmeldung: 26.06.1996
(73) Patentinhaber: BSH Bosch und Siemens Hausgeräte GmbH, 81669 München (DE)
(72) Erfinder: Vodermaier, Lorenz, D-83368 St. Georgen (DE); Fleissner, Reinhard, D-83352 Altenmarkt (DE)

(56) Entgegenhaltungen:
- DE-A- 3 412 517
- FR-A- 2 235 790
- GB-A- 2 225 826

## Beschreibung

Die vorliegende Erfindung betrifft einen Gasherd nach dem Oberbegriff des Anspruches 1.

Derartige Gasherde sind allgemein bekannt, z.B. aus GB 2 225 826 A, wobei der Gasmulde mindestens eine Brennstelle mit einem Gashahn zugeordnet ist. Der Gashahn ist über ein Schaltgestänge mit einer im Bereich einer Frontblende des Gasherdes drehbar befestigten Schalteinheit gekuppelt. Durch das Drehen der Schalteinheit ist der Gashahn entsprechend der gewünschten Gasmenge betätigbar. Dabei ist der Drehbereich des Gashahns über zwei Gashahnanschläge grundsätzlich auf 160° oder 210° begrenzt. Der Schalteinheit sind Markierungen zugeordnet, über die eine Bedienperson die der Drehstellung der Schalteinheit betriebsmäßig zugeordnete Drehstellung des Gashahnes erkennen kann. Nachteilig dabei ist, daß beim Aufdrehen bzw. Zudrehen des Gashahns mittels der Schalteinheit diese über den begrenzten Drehbereich des Gashahns hinaus verdreht werden kann. Dies kann zu einer bleibenden Torsion des Schaltgestänges und damit zu einer bleibenden Fehlzuordnung der Schalteinheit bezüglich der Gashahneinstellung führen, oder dazu, daß die Kupplungsvorrichtungen zwischen dem Schaltgestänge und dem Gashahn bzw. der Schalteinheit durch Überlastung bleibend aufgetrennt werden.

Aufgabe der vorliegenden Erfindung ist es, einen Gasherd bereitzustellen, der bei einfacher konstruktiver Ausgestaltung diese Fehlfunktionen vermeidet.

Erfindungsgemäß ist diese Aufgabe durch die Merkmale des Anspruches 1 gelöst. Durch die in der Schalteinheit angeordneten zwei Anschläge ist der Drehbereich der Schalteinheit auf den Drehbereich des Gashahnes begrenzt. Eine mechanische Überbeanspruchung infolge der Drehbewegung der Schalteinheit über den Drehbereich des Gashahnes kann deshalb nicht mehr erfolgen bzw. an das Schaltgestänge oder die Kupplungsvorrichtung zwischen dem Schaltgestänge und dem Gashahn bzw. der Schalteinheit weitergegeben werden. Die Bedienperson spürt sowohl in der Nullstellung als auch in der Endstellung der Schalteinheit einen definierten Anschlag.

Bei einem Gasherd mit einem Gashahn, der mit einer thermoelektrischen Zündsicherung ausgestattet ist, weist die Schalteinheit vorteilhafterweise einen Lagerkörper und einen damit eindrückbar und drehbar gelagerten Drehkörper auf. Mit der Zweiteiligkeit der Schalteinheit ist eine konstruktiv besonders einfache und eine ein angenehmes Bediengefühl vermittelnde Lösung zur Übertragung eines Verschiebe- und eines Drehweges vom Drehkörper auf den Gashahn realisiert. Gemäß einer vorteilhaften Ausgestaltung ist in der Schalteinheit bzw. dem Lagerkörper eine Zentralöffnung ausgeformt, in der sowohl der Nullanschlag als auch der Endanschlag ausgebildet sind. Dadurch sind die anschlagsspezifischen Merkmale der Schalteinheit von deren Stirnfläche weg auf deren Umfangsfläche verlagert, wodurch der Gestaltungsfreiraum bezüglich der auf die Schalteinheit im Bereich der Stirnfläche aufzusteckenden eigentlichen Schalthandhaben bzw. deren Austauschbarkeit vergrößert ist. Weiterhin ist es günstig, wenn der Nullanschlag und der Endanschlag die Verdrehung des Drehkörpers in jeder betriebsgemäß eingedrückten Stellung des Drehkörpers in den Lagerkörper auf den Drehbereich des Gashahnes begrenzen.

Gemäß einer vorteilhaften Ausführungsform besteht das Schaltgestänge aus einem verdrehbaren elastischen Material, beispielsweise aus Silikongummi. Da es einerseits gewünscht ist, den vollen Drehbereich des Gashahnes zur Verfügung zu stellen, und weil es andererseits fertigungstechnisch aufwendig ist, den Nullanschlag und den Endanschlag der Schalteinheit genau so anzuordnen, daß die Drehbereiche des Gashahnes und der Schalteinheit exakt gleich groß sind, kann es vorkommen, daß die Schalteinheit über den Drehbereich des Gashahnes hinaus geringfügig verdrehbar ist. Dieses Überdrehen soll dann durch das elastische Schaltgestänge vorübergehend aufgenommen werden. Nach dem Loslassen der Schalteinheit bzw. der Schalthandhabe dreht sich durch die elastischen Eigenschaften des Schaltgestänges dieses wieder geringfügig selbsttätig zurück.

Nachfolgend ist anhand schematischer Darstellungen ein Ausführungsbeispiel des erfindungsgemäßen Gasherdes mit einer Gasmulde beschrieben.

Es zeigen:
- Fig. 1: in einer Seitenansicht teilweise im Längsschnitt den Gashahn und einen Endabschnitt des daran befestigten Schaltgestänges;
- Fig. 2: eine Seitenansicht des Schaltgestänges;
- Fig. 3: eine Querschnittdarstellung im wesentlichen entlang der Linie III-III in Fig. 2;
- Fig. 4: eine Draufsicht auf einen Endabschnitt des Schaltgestänges in Fig. 2 und den daran angekuppelten Drehkörper der Schalteinheit;
- Fig. 5: eine Querschnittdarstellung der Schalteinheit im wesentlichen entlang der Linie V-V in Fig. 6;
- Fig. 6: eine Frontansicht der Schalteinheit;
- Fig. 7: eine Draufsicht auf die Schalteinheit nach Fig. 6 und
- Fig. 8: eine perspektivische Rückansicht der Schalteinheit.

Ein Gasherd umfaßt eine in eine Arbeitsplatte einsetzbare Gasmulde und einen in eine Küchenmöbelnische einschiebbaren eigentlichen Einbau-Gasherd (nicht gezeigt). Jeder Brennstelle der Gasmulde (nicht gezeigt) ist ein Gashahn 1 zugeordnet. Über den Gashahn 1 ist die der Brennstelle zuführbare Gasmenge einstellbar. Dazu weist der Gashahn 1 eine Schaltachse 2 auf. In dem Gashahn 1 ist durch das Eindrücken der in Öffnungsrichtung vorgespannten Schaltachse 2 eine thermoelektrische Zündsicherung (nicht gezeigt) betätigbar. Weiterhin ist durch das Drehen der Schaltachse 2 über ein Küken die Gasmenge in einem durch zwei Gashahnanschläge (nicht gezeigt) auf 210° beschränkten Drehbereich einstellbar. Auf die Schaltachse 2 ist ein Gelenkkörper 3 drehfest auf Anschlag aufsteckbar, der durch eine in einer entsprechenden Gelenköffnung 4 angeordneten Blattfeder 5 gegen ein Abziehen von der Schaltachse 2 gesichert ist. Am gegenüberliegenden Endabschnitt des dort hülsenförmigen Gelenkkörpers 3 weist dieser eine kugelförmige Aufnahme 7 auf, wobei die Wandung des Gelenkkörpers 3 in diesem Bereich mit einem ersten Hülsenschlitz 9 versehen ist. Die Aufnahme 7 mit dem Hülsenschlitz 9 bildet, wie später beschrieben ist, zusammen mit korrespondierenden Teilen eine Kugelgelenkkupplung.

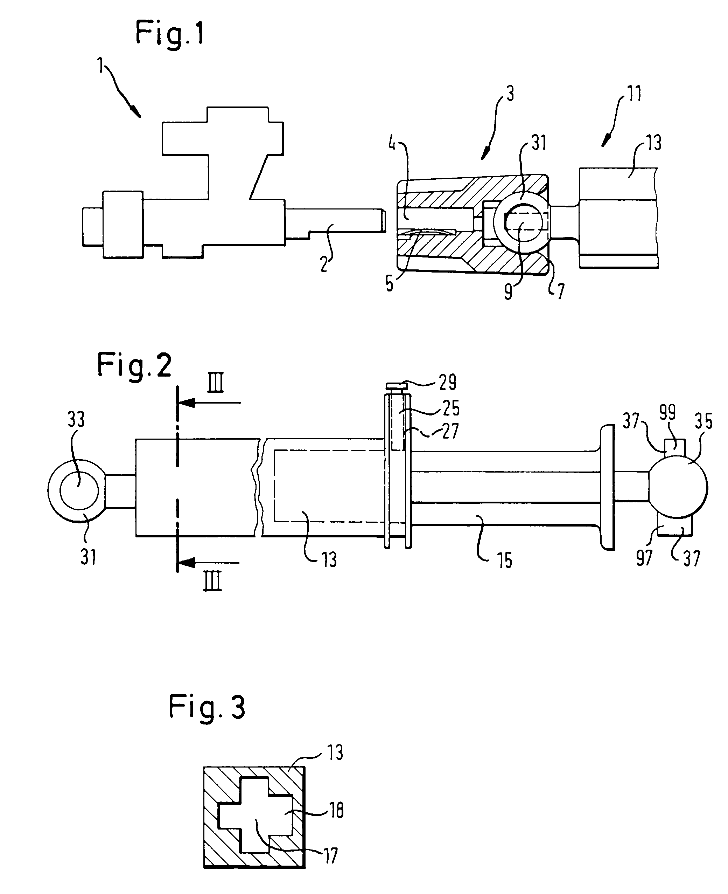

An den Gashahn 1 bzw. den Gelenkkörper 3 ist ein im wesentlichen stabförmiges, zweiteiliges Schaltgestänge 11 angekuppelt. Dieses weist einen stabförmigen Führungskörper 13 und einen darin in Längsrichtung des Führungskörpers 13 verschiebbar geführten, drehfesten Gleitkörper 15 auf. Dazu ist im Führungskörper ein Führungskanal 17 ausgeformt, dessen Querschnitt im wesentlichen kreuzförmig ist (Fig. 3). Korrespondierend dazu ist die Außenkontur des Gleitkörpers 15 in seinem zum Verschieben bestimmten Bereich im wesentlichen kreuzförmig gestaltet. Um das Einschieben des Gleitkörpers 15 in den Führungskörper 13 nur in einer einzigen relativen Drehstellung zueinander zu ermöglichen, weist der Führungskanal 17 über seine gesamte Länge einen breiteren Längsschlitz 18 und korrespondierend dazu der Gleitkörper 15 einen breiteren Kreuzarm auf. Im Bereich der Öffnung des Führungskanals 17 ist am Umfang des Führungskörpers 13 ein Flansch 25 mit einem radial verlaufenden Gewinde 27 angeordnet. Dadurch ist über eine in das Gewinde 27 einschraubbare Befestigungsschraube 29, der Gleitkörper 15 in einer bevorzugten Stellung innerhalb des Führungskörpers 13 festklemmbar bzw. justierbar und damit die Länge des Schaltgestänges festlegbar. An dem dem Flansch 25 gegenüberliegenden Endabschnitt des Führungskörpers 13 weist dieser einen ersten Kugelzapfen 31 mit einem ersten Schwert 33 auf. Diese bilden zusammen mit der Aufnahme 7 und dem ersten Hülsenschlitz 9 des Gelenkkörpers 3 eine Kugelgelenkkupplung zum spielfreien Übertragen eines Verschiebeweges sowie eines Drehmomentes. Auch der Gleitkörper 15 weist an dem Endabschnitt, der aus dem Festkörper 13 herausragt, einen zweiten Kugelzapfen 35 mit einem zweiten Schwert 37 auf. Diese entsprechen in ihrer speziellen Ausführung dem ersten Kugelzapfen 31 und dem ersten Schwert 33, wobei bei in den Führungskörper 13 eingeschobenem Gleitkörper 15 die beiden Schwerter 33, 37 senkrecht zueinander angeordnet sind.

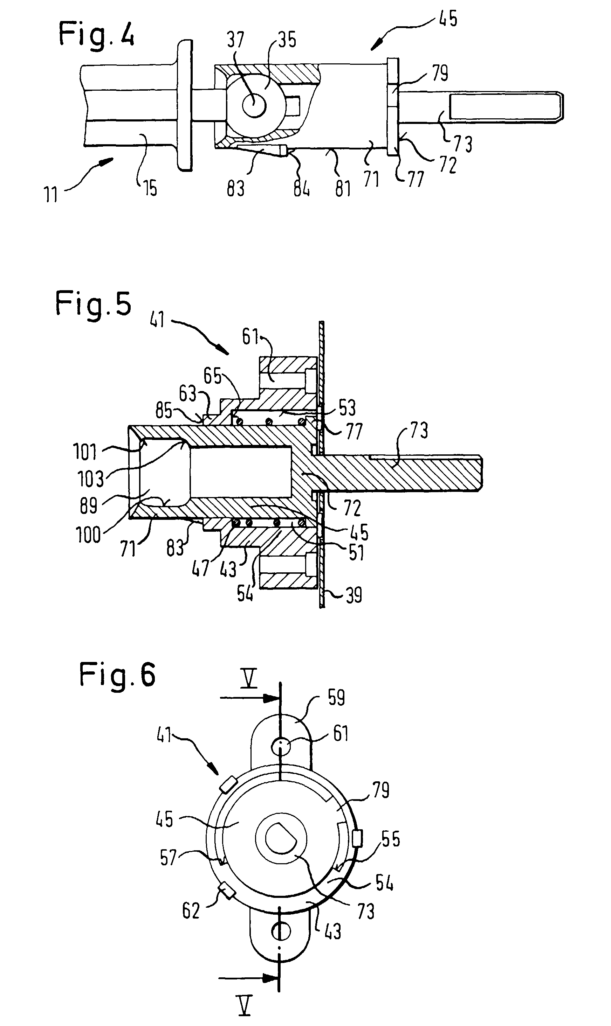

An eine Herdblende 39 im Bereich einer Frontblende des Gasherdes ist eine Schalteinheit 41 befestigt (Fig. 5). Diese besteht aus drei Teilen, nämlich einem Lagerkörper 43, einem darin verschiebbaren und drehbaren Drehkörper 45 und einer dazwischen angeordneten schraubenförmigen Druckfeder 47. Der Lagerkörper 43 ist entsprechend einem Hohlzylinder mit einer im wesentlichen kreisförmigen Zentralöffnung 51 ausgestattet, wobei an deren Innenumfangswandung 53 ein kreissegmentförmiger Anschlag 54 über die gesamte Länge der Zentralöffnung 51 nach innen hervorspringt und dabei einen Nullanschlag 55 und einen Endanschlag 57 bildet. Am Außenumfang des Lagerkörpers 43 sind zwei Befestigungsansätze 59 mit einer jeweiligen Befestigungsöffnung 61 zum Befestigen des Lagerkörpers 43 an der Herdblende 39 vorgesehen. Zudem sind für die eindeutige Zuordnung der Schalteinheit 41 bzw. des Lagerkörpers 43 zur Herdblende 39 an der dieser zugewandten Stirnfläche des Lagerkörpers drei gleichmäßig um den Umfang verteilte Justierungsvorsprünge 62 angebracht. Diese greifen in entsprechende Öffnungen der Herdblende 39. An dem den Justierungsvorsprüngen 62 abgewandten Endabschnitt des Lagerkörpers 43 ist ein aus der Zentralöffnung 51 hervorspringender sich von der Innenumfangswandung 53 nach innen erstreckender Anschlagring 63 fest angeformt. Dadurch ist in der Zentralöffnung 51 eine einen ringförmigen Anschlag bildende Anschlagschulter 65 gebildet. Der Anschlagring 63 weist weiterhin eine Unterbrechung 67 auf, die sich bis zur Innenumfangswandung 53 erstreckt. Der Anschlagring 63 ist an dieser Stelle also vollständig unterbrochen.

Der Drehkörper 45 weist einen hohlzylinderförmigen Hauptkörper 71 auf, aus dessen geschlossener Stirnseite 72 sich auf der Längsachse des Drehkörpers 45 eine damit starr verbundene zylindrische, in einem Teilbereich des Umfangs abgeflachte Drehkörperwelle 73 erstreckt. Auf diese ist ein Schaltknopf zur Bedienung der Brennstelle drehfest aufsteckbar (nicht gezeigt). An der Stirnseite 72 ist eine ringförmige Schulter 77 ausgeformt, die als ein Anschlag für die Druckfeder 47 dient. Von der Schulter 77 springt ein sich radial erstreckender Ansatz 79 hervor, der im zusammengebauten Zustand der Schalteinheit 41 den Drehbereich des Drehkörpers 45 im Lagerkörper 43 über den Nullanschlag 55 und den Endanschlag 57 des Lagerkörpers 43 entsprechend dem Drehbereich des Gashahns 1 auf 210° begrenzt.

An dem der Drehkörperwelle 73 entgegengesetzten Endabschnitt des Hauptkörpers 71 ist an einer Außenumfangswandung 81 des Hauptkörpers in dessen Längsrichtung eine hakenförmige Nase 83 ausgeformt. Die Nase 83 besitzt eine Nasenanschlagfläche 84, die eine Anschlagstirnfläche 85 des Anschlagringes 63 im zusammengebauten Zustand der Schalteinheit 41 hintergreift. Auf dieser Anschlagstirnfläche 85 des Lagerkörpers 43 ist unmittelbar angrenzend an die Unterbrechung 67 eine sich in axialer Richtung erstreckende Auflaufschräge 87 ausgeformt. Deren Rückseite 88 stellt die Verlängerung der Innenwandung der Unterbrechung 67 dar, wobei die Auflaufschräge 87 von der Rückseite 88 ausgehend entlang eines Teilstückes des Umfanges des Anschlagringes 63 wieder in die Anschlagstirnfläche 85 übergeht. Wenn im eingebauten Zustand der Schalteinheit 41 der Ansatz 79 des Drehkörpers 45 am Nullanschlag 55 des Lagerkörpers 43 anliegt, ist über das angekuppelte Schaltgestänge 11 der Gashahn 1 in seiner Nullstellung und damit geschlossen.

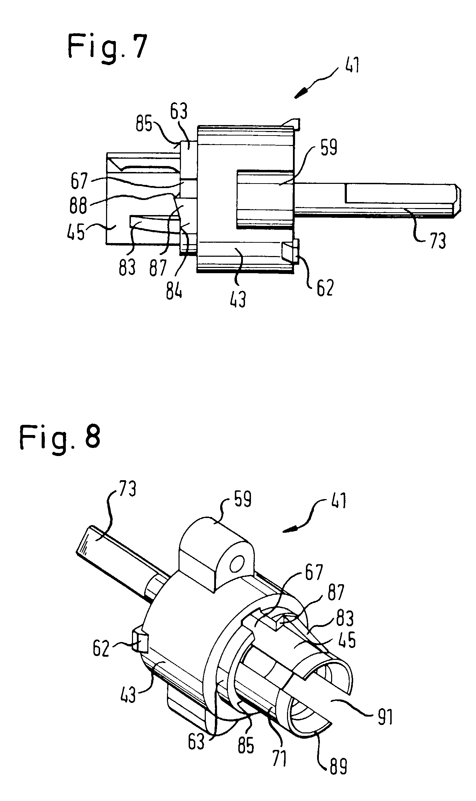

Durch die Befestigung der Schalteinheit 41 an der Herdblende 39 ist die Druckfeder 47 zwischen der Schulter 77 des Drehkörpers 45 und der Anschlagschulter 65 des Anschlagringes 63 in Druckrichtung vorgespannt und drückt den Drehkörper 45 gegen die Herdblende 39. In dieser Nullstellung (nicht gezeigt) ist die Nase 83 vollständig durch die Unterbrechung 67 des Anschlagringes 63 in Richtung auf das Herdinnere durchgeschoben. Ein Verdrehen des Drehkörpers 45, ausgehend vom Nullanschlag 55 in Richtung Endanschlag 57, ist jedoch zunächst durch die sich an die Unterbrechung 67 unmittelbar anschließende, in axialer Richtung des Lagerkörpers 43 von der Anschlagstirnfläche 85 hervorspringende Rückseite 88 der Auflaufschräge 87 verhindert. Nach einem geringfügigen Eindrücken des Drehkörpers 45 entgegen dem Widerstand der Druckfeder 47 in den Lagerkörper 43, wobei die thermoelektrische Zündsicherung noch nicht betätigt wird, gelangt die Nase 83 außerhalb des Wirkungsbereichs der als Anschlag dienenden Rückseite 88 der Auflaufschräge 87 und kann in Richtung Endanschlag 57 gedreht werden. Dabei läuft der Drehkörper 45 mit der Nasenanschlagfläche 84 der Nase 83 auf der Anschlagstirnfläche 85 des Anschlagringes 63 infolge der Federkraft der Druckfeder 47, wenn durch die Bedienperson keine Axialkraft aufgewendet wird (Fig. 7). Der Drehbereich der Schalteinheit 41 ist nach etwa 210° durch das Anschlagen des Ansatzes 79 an den Endanschlag 57 entsprechend dem Drehbereich des Gashahnes 1 begrenzt. Ein Weiterdrehen des Drehkörpers 45 bzw. der daran drehfest befestigten Handhabe ist dadurch ausgeschlossen. Da sich der kreissegmentförmige Anschlag 54 im Inneren des Lagerkörpers 43 über dessen gesamte Länge erstreckt, ist der Ansatz 79, unabhängig davon wie weit der Drehkörper 45 in den Lagerkörper 43 gedrückt ist, weder am Nullanschlag 55 noch am Endanschlag 57 vorbeibewegbar. Das Eindrücken des Drehkörpers 45 bzw. der Zündweg der Schalteinheit 41 ist durch das Anschlagen der Schulter 77 des Drehkörpers 45 an der Anschlagschulter 65 des Lagerkörpers 43 bzw. der zusammengedrückten Druckfeder 47 begrenzt.

Der Drehkörper 45 weist an dem dem Schaltgestänge 11 zugewandten hülsenförmigen Endabschnitt bzw. dem Hauptkörper 71 einen sacklochförmigen Hohlzylinder 89 mit einem zweiten Hülsenschlitz 91 auf, die zusammen mit dem zweiten Kugelzapfen 35 und dem zweiten Schwert 37 des Schaltgestänges 11 eine weitere Kugelgelenkkupplung bilden. Zur eindeutigen Zuordnung des Hohlzylinders 89 zum zweiten Kugelzapfen 35 mit dem Schwert 37 ist die Schlitzbreite im Bereich der den zweiten Schlitz 91 bildenden beiden Wandungsunterbrechungen des Hohlzylinders 89 entsprechend den unterschiedlichen Stärken eines ersten Teilschwertes 97 und eines zweiten Teilschwertes 99 des zweiten Schwerts 37 unterschiedlich groß. Der weiter oben beschriebene erste Hülsenschlitz 9 des Gelenkkörpers 3 ist entsprechend dem zweiten Hülsenschlitz 91 ausgeformt.

Weiterhin ist der Durchmesser einer Innenumfangswandung 100 des Hohlzylinders 89 des Drehkörpers 45 zum Zwecke der lagernden Aufnahme des zweiten Kugelzapfens 35 über eine bestimmte Länge so groß wie dessen Außendurchmesser (Fig. 5). Diese Länge wird zum einen von einer in der Innenumfangswandung 100 ausgeformten nach innen vorspringenden Rastschulter 101 und zum anderen von einem sich von der Innenumfangswandung 100 radial nach innen erstreckenden kugelschalenförmigen Endanschlag 103 begrenzt. Der lagerichtig in den Hohlzylinder 89 eingerastete zweite Kugelzapfen 35 ist in Längsrichtung um etwa 3 mm zwischen dem kugelschalenförmigen Endanschlag 103 und der Rastschulter 101 an der Eintrittsöffnung des Hohlzylinders 89 entsprechend einer Kugelgelenkkupplung mit Längenausgleichsspiel verschiebbar.

## Patentansprüche

1. Gasherd mit einer Gasmulde, der mindestens ein Gashahn (1) zugeordnet ist, der über ein Schaltgestänge (11) mittels einer im Bereich einer Frontblende des Gasherdes drehbar befestigten Schalteinheit (41) betätigbar ist, wobei ein Drehbereich des Gashahnes (1) durch zwei Gashahnanschläge begrenzt ist , **dadurch gekennzeichnet,** daß die Schalteinheit (41) einen Nullanschlag (55) und einen Endanschlag (57) aufweist, die das Verdrehen der Schalteinheit (41) im wesentlichen auf den Drehbereich des Gashahnes (1) begrenzen.

2. Gasherd nach Anspruch 1 mit einem Gashahn mit einer thermoelektrischen Zündsicherung, dadurch gekennzeichnet, daß die Schalteinheit (41) einen Lagerkörper (43) und einen damit eindrückbar und drehbar gelagerten Drehkörper (45) aufweist.

3. Gasherd nach Anspruch 2, dadurch gekennzeichnet, daß die Schalteinheit (41) eine Zentralöffnung (51) aufweist, in der der Nullanschlag (55) und der Endanschlag (57) ausgebildet sind.

4. Gasherd nach Anspruch 2 oder 3, dadurch gekennzeichnet, daß der Nullanschlag (55) und der Endanschlag (57) die Verdrehung des Drehkörpers (45) in jeder betriebsgemäß eingedrückten Stellung des Drehkörpers (45) in den Lagerkörper (43) begrenzen.

5. Gasherd nach einem der vorhergehenden Ansprüche, dadurch gekennzeichnet, daß bei einem geringfügigen Übermaß der Anschläge (55, 57) der Schalteinheit (41), das ein geringfügiges Verdrehen der Schalteinheit (41) über den Drehbereich des Gashahnes (1) hinaus ermöglicht, das Schaltgestänge (11) aus einem verdrehbaren elastischen Material besteht.

## Claims

1. Gas stove with a gas hob which is associated with at least one gas cock (1), which is actuable by way of a switching linkage (11) by means of a switching unit (41) fastened to be rotatable in the region of a front shield of the gas stove, wherein a rotary range of the gas cock (1) is limited by two gas cock abutments, characterised in that the switching unit (41) comprises a zero abutment (55) and an end abutment (57), which limit the rotation of the switching unit (41) substantially to the rotary range of the gas cock (1).

2. Gas stove according to claim 1 with a gas cock with a thermo-electric ignition protection, characterised in that the switching unit (41) comprises a bearing body (43) and a rotary body (45), which is pushable in thereby and mounted to be rotatable.

3. Gas stove according to claim 2, characterised in that the switching unit (41) has a control opening (51), in which the zero abutment (55) and the end abutment (57) are formed.

4. Gas stove according to claim 2 or 3, characterised in that the zero abutment (55) and the end abutment (57) limit the rotation of the rotary body (45) in every operationally proper pressed-in setting of the rotary body (45) into the bearing body (43).

5. Gas stove according to one of the preceding claims, characterised in that the switching linkage (11) consists of a twistable material in the case of a slight overdimensioning of the abutments (55, 57) of the switching unit (41), which permits a slight twisting of the switching unit (41) beyond the rotary range of the gas cock (1).

## Revendications

1. Cuisinière à gaz comprenant une plaque de cuisson à laquelle est associé au moins un robinet de gaz (1) qui peut être actionné, par l'intermédiaire d'une tringlerie de commande (11), au moyen d'une unité de commande (41) fixée rotative dans la région d'un panneau avant de la cuisinière à gaz, une plage de rotation du robinet de gaz (1) étant limitée par deux butées de robinet de gaz, caractérisée en ce que l'unité de commande (41) présente une butée de zéro (55) et une butée de fin de course (57) qui limitent la rotation de l'unité de commande (41) substantiellement à la plage de rotation du robinet de gaz (1).

2. Cuisinière à gaz selon la revendication 1, comprenant un robinet de gaz muni d'une sécurité d'allumage thermoélectrique, caractérisée en ce que l'unité de commande (41) présente un corps de palier (43) et un corps tournant (45) qui est monté avec ce palier de façon à pouvoir être enfoncé et tourné.

3. Cuisinière à gaz selon la revendication 2, caractérisée en ce que l'unité de commande (41) présente une ouverture centrale (51) dans laquelle sont formées la butée de zéro (55) et la butée de fin de course (57).

4. Cuisinière à gaz selon la revendication 2 ou 3, caractérisée en ce que la butée de zéro (55) et la butée de fin de course (57) limitent la rotation du corps tournant (45) dans chaque position du corps tournant (45) enfoncée dans le corps de palier (43) pour le fonctionnement.

5. Cuisinière à gaz selon une des revendications précédentes, caractérisée en ce que, dans le cas d'une légère surcote des butées (55, 57) de l'unité de commande (41), qui permet de tourner légèrement l'unité de commande (41) au-delà de la plage de rotation du robinet de gaz (11), la tringlerie (11) est composée d'une matière élastique acceptant une torsion.
